# EUROPEAN PATENT APPLICATION

(11) **EP 2 679 806 A1**
(43) Date of publication of application: **01.01.2014**
(21) Application number: 12749893.9
(22) Date of filing: 27.02.2012
(51) Int. Cl.: F03D 1/06, B29C 70/38, B29C 70/46

(54) **METHOD FOR MANUFACTURING WIND TURBINE BLADES, BLADES FOR PROPELLERS, WINGS OR SIMILAR STRUCTURES, AND STRUCTURE IN THE SHAPE OF A BLADE PRODUCED BY MEANS OF SAID METHOD**

(30) Priority: 25.02.2011 ES 201130249
(71) Applicant: Garcia Castro, Francisco Javier, 15180 Alvedro (La Coruña) (ES); Manso Garcia, Juan José, 15180 Alvedro (La Coruña) (ES)
(72) Inventor: Garcia Castro, Francisco Javier, 15180 Alvedro (La Coruña) (ES); Manso Garcia, Juan José, 15180 Alvedro (La Coruña) (ES)
(74) Representative: Capitán García, Maria Nuria
(86) International application number: PCT/ES2012/070118
(87) International publication number: WO 2012/113966

(57) **Abstract**

The invention relates to a method for manufacturing wind turbine blades, blades for propellers, wings or similar structures, and to a structure in the shape of a blade produced by means of said method, including: using a female mold of the leading edge (5), a female mold of the trailing edge (6), and a third mold (7) for a composite male tool (8) as a lost mold for manufacturing at least one inner crossbeam (4); wherein a demolding agent and an outer protective varnish is applied on the inner sides by robot or a digitally-controlled device; applying prepreg in superimposed layers; coating the prepreg with a vacuum film, and connecting to a pump for extracting air from between the prepreg layers; fitting together the molds and positioning the pieces with the prepreg laminates; and applying pressure and thermal curve for the method of curing or polymerizing the set of pieces in a single stage or all at once.

## Description

### OBJECT AND SCOPE OF THE INVENTION

As stated in the rationale of this descriptive report, the invention refers to a procedure for the manufacture of wind turbine blades, propeller blades, wings or similar structures and structure in the form of a blade or the like obtained by means of this procedure.

More specifically, the object of the invention is focused, on the one hand, on a procedure that is specially designed for the manufacture of wind turbine blades or the like in a single stage or step, which we would call a "single biological process", consisting of the upper surface of the blade, known as the "extrados", the lower surface of the blade, known as the "intrados", and the structural element or internal side member of the blade being formed at the same time.

Furthermore, the process proposed envisages the use, as a product for the execution of the blades, of the type of material that is called "PREPREG", consisting of a product composed of reinforcement fibres pre-impregnated in a matrix or resin, so that we do not have to wait to impregnate the fibrous reinforcements, as happens in infusion or injection processes. The fibrous reinforcements come already impregnated by the producer of the "PREPREG" for the manufacture of the blades.

Besides this and in a wholly innovative manner, the process advocated envisages the manufacture of the blade by forming it from two pieces which correspond to the leading edge and to the trailing or leakage edge of the blade, in contrast to the shell-shaped extrados and intrados pieces with which blades made on the basis of conventional systems are formed, thereby obtaining advantageously a structure that offers significantly improved mechanical features and reliability.

Additionally, this means simplifying the process, while securing a reduction in their weight as well as lowering the economic cost of production.

The scope of the present invention lies within the technical sector, both of the industry engaged in the manufacture of wind turbine blades and of the industry engaged in the building of aeronautical structures or other industries, since the manufacturing procedure to which the invention refers is applicable to propellers, aircraft wings or pieces with similar structural features and with uses similar to those of wind turbine blades.

### BACKGROUND OF THE INVENTION

Hitherto wind turbine blades have been manufactured by using two moulds on which the upper skin and the lower skin are produced by depositing on them layers of dry reinforcement fibres, as well as foams, cores and stiffening elements, which are then impregnated with resins by means of infusion techniques or even manually.

In other cases, the prepregs with their corresponding cores, foams or stiffeners are deposited on the moulds of the future skins, and alternatively, if the blades are not very large, the resins are injected onto dry reinforcements, although they naturally require sealing countermoulds, so that the manufacturing system is complicated and made considerably more expensive.

In whichever of the foregoing cases the skins and accessories are produced separately, either by normal contact, infusion or prepreg, and after being polymerized they are joined up by means of adhesives, each skin with its mould, for the purpose of producing a single piece.

These movements entail making adjustments at the connecting edges and use of large amounts of adhesives for securing the attachment of these edges to one another, with the subsequent enforced finishing and painting operation. Besides involving an extra cost, all this may compromise the mechanical performance of the blade.

The aim of the present invention is, therefore, a new blade manufacturing procedure in which these drawbacks are overcome, while it should be pointed out that the applicant is unaware of the existence of any other procedure or invention of similar application presenting technical, structural and constitutive features similar to those of the procedure advocated here.

In this respect, we may mention the existence of the following patents as the most relevant documents relating to the manufacture of wind turbine blades:
- ES2319152, relating to a procedure for the manufacture of wind turbine blades, consisting of the execution of a single foam core, with numerical control machines, application of reinforcement layers pre-impregnated in resin, curing of the layers in the actual process of their application, by means of a combination of instant UV (ultraviolet) curing and thermal curing, polishing of the blade surface, also by means of the use of an automatic numerical control machine, and final painting.
- ES2319154 Improvements introduced into the object of patent n° P 200701994 relating to a:
   "Procedure for the manufacture of wind turbine blades", by means of which the reinforcement layers making up the lining or coating of the foam core are laid dry, being applied directly on the profiled foam, either by means of robots or by hand and then impregnated with resin, while the curing is carried out by means of a normal or thermal process, either by infusion procedures, making use of conventional materials and procedures, or else by injection, employing for this the required external closing moulds made previously for such purpose.

The heating of the moulds can be achieved by means of installing ducts with the circulation of such heat-bearing fluids as oils, which permit swift regulation and thermal control.

It is not observed, however, that said inventions, whether taken separately or in conjunction, describe a procedure with the features of the one advocated here.

### SUMMARY OF THE INVENTION

Thus, the procedure for the manufacture of wind turbine blades, propeller blades or blades for similar applications as proposed by the present invention constitutes a notable novelty within its scope of application, since significant advantages are definitely achieved through its implementation in comparison to the systems known at present, while the characterizing details that distinguish it are set forth in the final claims accompanying the present descriptive report of same.

Specifically, the main initial difference of the procedure proposed in the present invention lies in the fact that the female moulds are not the extrados or upper surface mould and the intrados or lower surface mould proper but the leading edge mould and the trailing edge mould, so no joining of pieces takes place as hitherto between the connecting edges of the extrados upper skin and the intrados lower skin.

This fact represents a highly important difference that affects the reliability of the blade as opposed to the conventional bonding by the edges of same, providing an aerodynamic leading and trailing edge point, complete removal of the adhesive, reduction of the weight, lowering of the cost, and enhancement of the mechanical properties of the blade.

In addition, the different prepreg layers are deposited on one another, by means of numerical control machines, inside both leading and trailing edge moulds, following a sequence pre-established by calculation, with slight automatic compacting, as per sequence, with inclusion, if necessary, at one or two points of contact of some stiffening element, such as foam, balsa or honeycomb core.

The prepreg deposited, both in the leading and the trailing edge mould, is raw and sticky, which is known as State B.

To eliminate environmental pollution and, at the same time, to remove occluded air as far as possible and contribute incidentally towards compacting and immobilizing, protection is provided with a vacuum film that it is not necessary to remove afterwards and which remains as a laminate protector.

While working on the two leading and trailing edge moulds, a preferably C-shaped structural reinforcement is produced, also made from prepreg.

For this purpose a male jig is made, covered with a composite C-shaped shell, which also becomes polymerized by temperature or else by a hybrid system (temperature-radiation). Once this C-shaped shell is polymerized, the tool will act as a lost core mould onto which the raw prepreg is deposited with a numerical control machine in accordance with a pre-set sequence.

This structural side member will act as a stiffening element or stiffener and transmitter of the loads acting both on the extrados and intrados skins, right from the root to the end of the blade.

After the manufacture of this reinforcing side member the leading edge, trailing edge and stiffening C-shaped side member assembly is then heated in a single operation, so that the blade is obtained in a single step or "biological production".

In the case of a sustaining surface, this procedure enables us to meet the main axes - elastic, torsion, gravity - in a relatively small defined area.

In view of the foregoing, it is confirmed that the above-described procedure for the manufacture of wind turbine blades, propeller blades, wings or similar structures and the blade-shaped structure or similar obtained by means of said procedure represent an innovation of structural and constitutive features hitherto unknown for such a purpose, being therefore reasons which, added to its practical utility, endow it with sufficient grounds to obtain the privilege of exclusiveness being applied for.

### BRIEF DESCRIPTION OF THE DRAWINGS

To supplement the description that is being made of the procedure that is the object of the invention and to assist a better understanding of the features differentiating it, the present descriptive report is accompanied, as an integral part thereof, by a set of drawings, wherein on an illustrative and non-restrictive basis there is represented the following:
Figure 1 - It shows a cross-sectional view of a specimen blade with a single structural reinforcing side member, obtained by means of the procedure that is the object of the invention, where the parts and elements integrating it may be observed.
Figures 2-A and 2-B - They each show a cross-sectional view of the leading edge of the structural side member forming part of the blade, both before being joined and once joined, respectively.
Figures 3-A and 3-B - They each show a cross-sectional view of the trailing edge forming part of the blade, represented respectively before and after engagement in the side member attached to the leading edge, in order to complete the blade.
Figures 4 to 20 - They show in respective cross-sectional views the different stages of the process for manufacture of the blade-like structure, as per the procedure that is the object of the invention, where we may observe each of the steps that are followed therein to manufacture a blade like the one shown in the example in figure 1.

### DETAILED DESCRIPTION OF THE PREFERRED EMBODIMENTS

In the light of the above-mentioned figures and in accordance with the numbering adopted, we may observe in them a specimen preferred embodiment of the invention, which comprises the parts and elements that are described in detail hereinunder.

Considering said figures, we may observe that the procedure advocated is intended for the manufacture of a blade-like structure (1), which will be composed of a leading edge (2), a trailing edge (3) and, at least, one inner reinforcing side member (4) made up of pieces executed from sheets of prepreg material.

To this end, said procedure comprises the use of a female mould of the leading edge (5) and a female mould of the trailing edge (6), as well as a third mould (7) whereby a male jig (8) is obtained that acts as a lost mould for manufacturing the structural side member (4) and which may be C- or closed-box or even double-T shaped, said male jig (8) being made from composite.

The inner sides of the afore-mentioned female leading edge (5) and trailing edge (6) moulds will receive a surface treatment with a demoulding agent, as in any composites process. This agent shall be applied automatically with a robot or numerical control machine.

When the demoulding agent is dry, a "gelcoat" or specific interior varnish is applied that will act as the exterior protector of the future structure (1) against unfavourable environmental and weather conditions, being also applied in an automated manner by means of a robot.

Application of the prepreg material then begins in superimposed layers, according to a previously calculated sequence. This is applied in the form of fabrics or tapes, which may equally be of glass, carbon, aramides, hybrids, kevlar, thermoplastics, nanotubes, impregnated with vinyl ester resin, epoxy, PP, PET, amongst others of variable composition, in gram weights that may range from 500g/m² to 2000g/m², with the possibility of presenting a variable configuration, as appropriate, for instance, UD one-dimensional, a veil, biaxial, triaxial, etc.

As regards the side member (4), which is obtained from the afore-mentioned male jig (8), it is executed in the same way, except that the prepreg layers are applied directly on the lost male jig (8), with no need either for demoulding agent or "gelcoat".

Furthermore, we should mention that support pieces (not represented in the drawings) may be placed in the moulds by way of additional shims, right in the angle of the leading edge or in the angle of the trailing edge and before the turning of said moulds takes place in order to seek the end form or even at any point of the cross section of the blade or structure that is deemed fit.

The function of said pieces, which may be of synthetic foam, balsa or honeycomb core, is manifold. On the one hand, inserted between the layers of prepreg they will constitute what is known as a "sandwich technique", thereby contributing to consolidation of the end laminate through increasing its strength and lowering its weight. On the other hand, they may be of use for marking and fixing the position of the multiple superimposed layers of prepreg perfectly, conferring greater assurance of precision.

Lastly the prepreg laminates are covered with a vacuum film and they are then connected to a pump to which they should be connected for a few minutes not only to ensure the extraction of possible air occluded between the laminates, but also to improve compaction between the prepreg layers.

It should be pointed out that the precaution should be taken of placing strips of "peelable fabric" on the parts of the prepreg sheet that are going to be in direct contact with one another, as is the case of the reinforcing side member (4) on the leading edges (2) and trailing edges (3).

These strips of peelable fabric should be withdrawn at the time of joining up together the three parts of the blade, i.e. the leading and trailing edges and the side member. It will not be necessary to remove the rest of the vacuum film which will remain incorporated into the laminate for life.

When the three parts making up the section of a blade or structure (1) are coupled and set firmly in place, a slight pressure is exerted on the assembly to assist close contact of the three parts and to subject it to the thermal curve of the process of curing or polymerization of the set of pieces in the same single stage or step, in accordance with the guidelines laid down by the manufacturer and the supplier of the prepregs.

In the case of blades of large dimensions or megablades, it may be advisable to position an additional structural side member (4) parallel to the side member described initially, proceeding for its formation in the same way as described.

Furthermore, to assist in positioning the side members (4) correctly between the inner surfaces of the leading edge (2) and trailing edge (3) prepreg laminates, the numerical control machine or robot should mark the exact area on said prepreg laminates, for example with a ridge (9) by means of the increase of various strips of prepreg, thereby achieving a high precision mechanical engagement.

The female moulds of the leading (5) and trailing (6) edges are metallic, being executed preferably with a sheet of steel of an appropriate suggested but non-restrictive thickness of 3 or 4 mm, which is bent in accordance with the desired outline, a task calling for precision metalworking. On the outside of said sheet, which may be steel or aluminium, metal reinforcing brackets (5a and 6a) are welded to endow these moulds with consolidation and dimensional strength as required for their handling.

In addition, the moulds (5 and 6) are provided on their outer side with a heating system which may either be electrical or another different type, for the purpose of being able to permit the application of an adjustable temperature at all times so as to achieve the curing of the prepreg sheets. Said heating system should be able to a temperature of up to 150°C, the maximum working temperature normally being 120°C so as to achieve polymerization in less than an hour.

In certain areas, the moulds also present small-sized holes which are in communication on the outside of the mould with hoses that in turn permit connection to a compressor.

In this way, once polymerization has been completed, compressed air is applied via said holes in order to secure the expulsion of the piece from the mould. The holes are protected with adhesive tape prior to the application of the gelcoat in the mould.

We should point out that inside the blade or structure (1), which is completely hollow, and prior to polymerization, a flow of hot air may also be applied, which will mean that the prepreg laminate is achieved both from inside and outside at the same time, determining a quicker and more uniform polymerization and preventing thermal gradients.

At the same time, when polymerization has been completed, a flow of cold air may be applied to speed up the demoulding of the blade.

With the manufacturing process described, the blade will emerge from the mould practically completed, with no need for edge planing, sanding, polishing or painting, which represents cleanliness and speed in the production process and ultimate economy, besides reduction in weight. Nonetheless, once the blade has been extracted from the mould at the termination of the manufacturing process, if so required, it may be subjected to classic termination processes.

Lastly, we should point out that the process advocated may be 90% automated, achieving in addition very high levels of repeatability and reliability not feasible with current techniques.

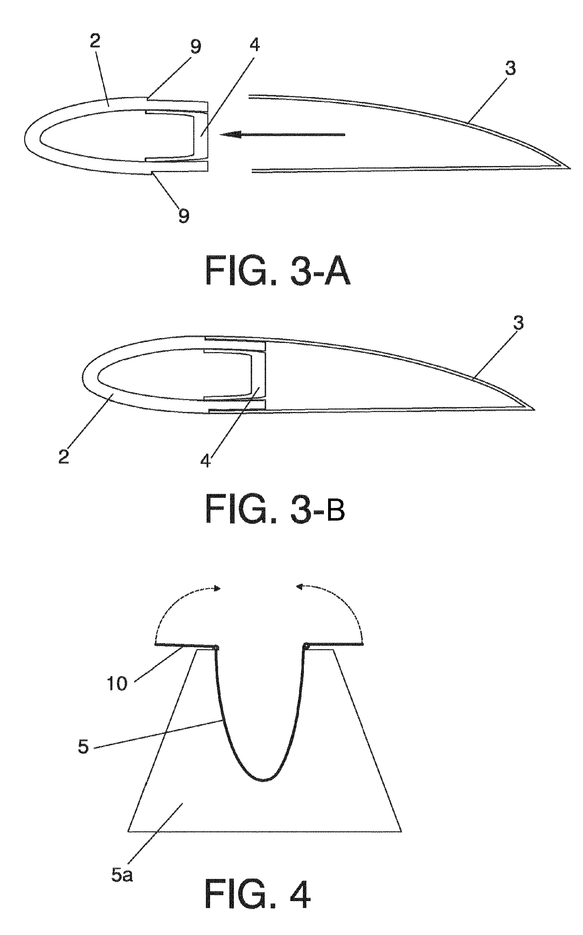

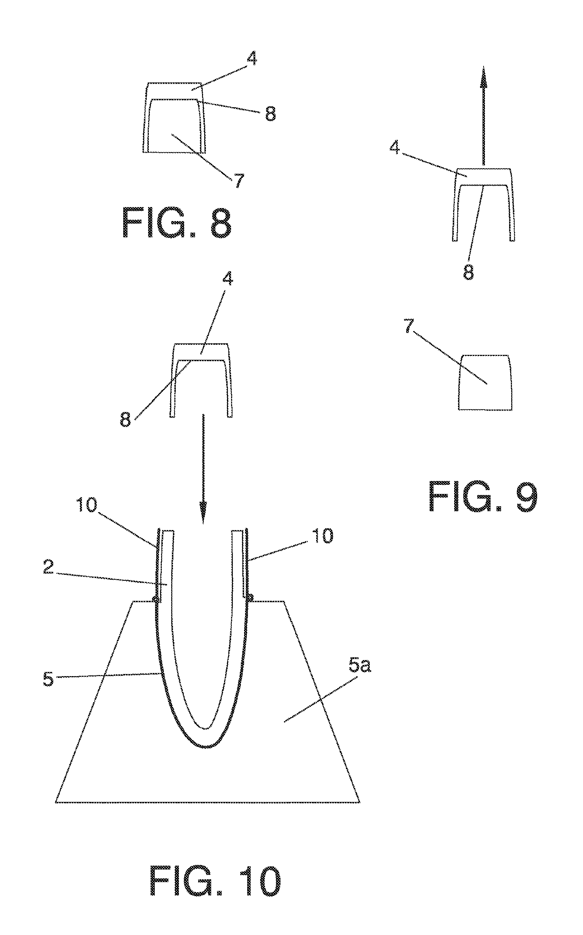

Considering figures 4 to 20, each one of the different stages of the process described may be observed clearly in them.

Thus, figure 4 shows the female mould of the leading edge (5) and we may observe a bracket (5a) for stiffening the mould plate and the incorporation into said mould of fins (10) that are rotary and mobile, which permit the depositing of sheets of prepreg on the inside of the mould, marking the ridge (9) for subsequent receiving of the prepreg laminate making up the trailing edge piece (3).

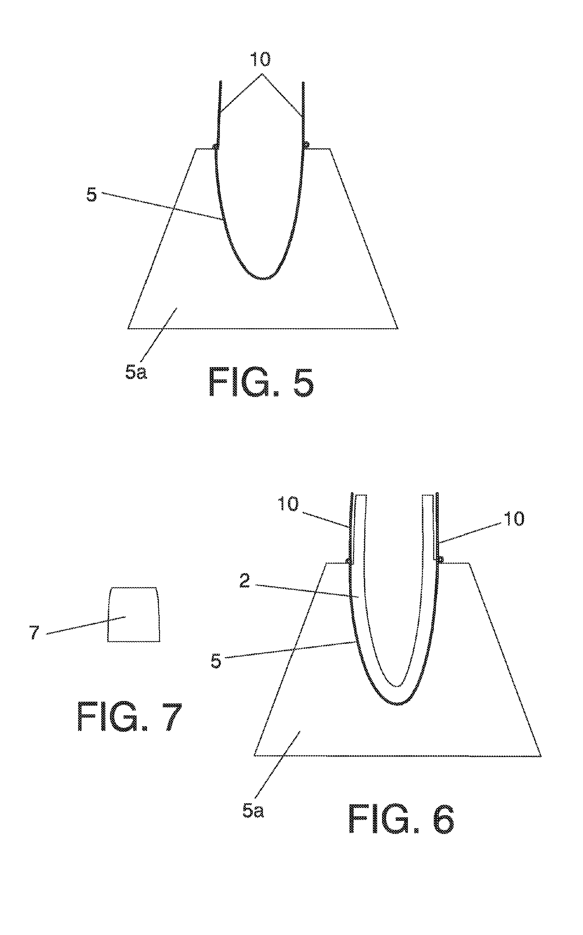

Figure 5 depicts the above-mentioned mobile fins (10) raised, arranged to receive the layers of prepreg that will make up the leading edge piece (2), which is shown after being deposited in this female leading edge mould (6) in figure 6.

For their part, figures 7 to 9 show the formation of the side member (4), by means of use of the third mould (7), which shall preferably be metallic, there being shaped on it the composite male jig (8) so that it forms a kind of shell that acts as a lost support or mould and on which the prepreg material that makes up the aforesaid side member (4) is incorporated.

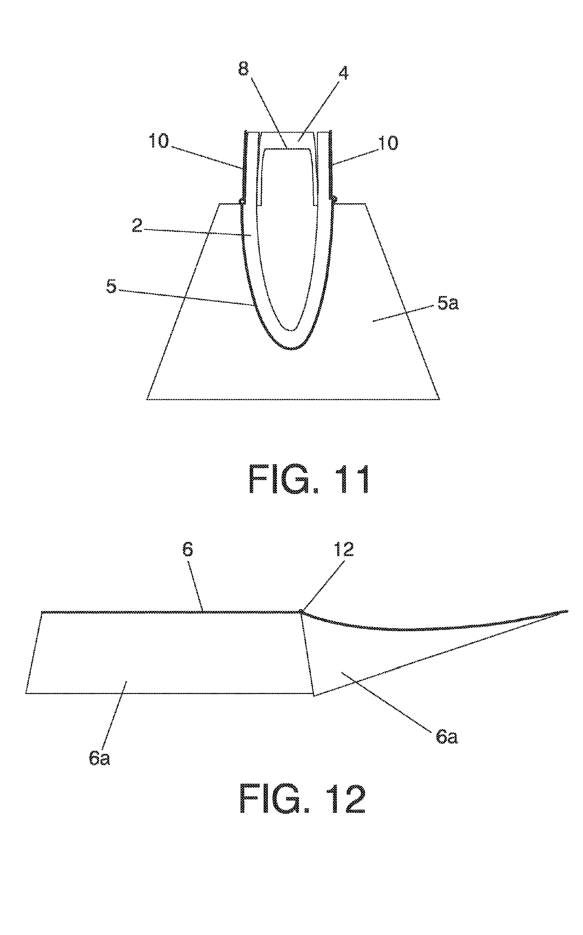

Once the side member (4) has been shaped, it is set in place on the female mould of the leading edge (5) incorporating the prepreg that will form the leading edge piece (2), both pieces being attached as shown in figure 11.

Considering figures 12 to 14, we observe that the female mould of the trailing edge (6), which also incorporates reinforcement brackets (6a), is made up of two parts jointed with a hinge (11), which permits the retracting movement of said pieces to form the mould.

Thus, in this mould the prepreg laminating process is carried out first of all with the same deployment, and a number of longitudinal prepreg tapes or strips are deposited right on the hinge (11) to reinforce and consolidate said area as that area forms the end of the trailing edge piece (3) of the structure (1). At this point, furthermore, though not represented in the figures, a foam, balsa or honeycomb core piece of those mentioned above may be added.

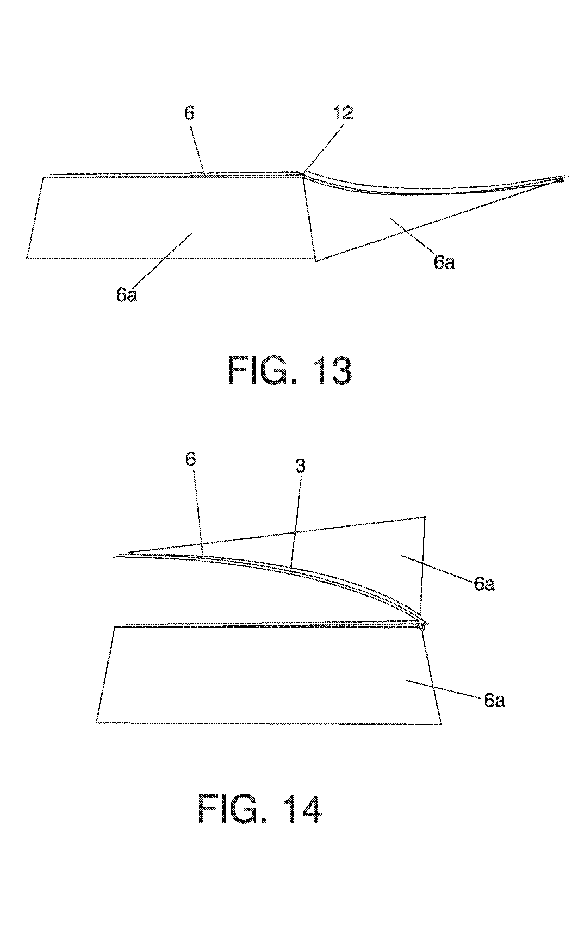

In figure 14 we observe the female mould of the trailing edge (6) after being bent and folded back, containing in its interior the prepreg laminate and the vacuum film installed in the previous stage, with the possible inclusion of a shim (not represented) if so needed.

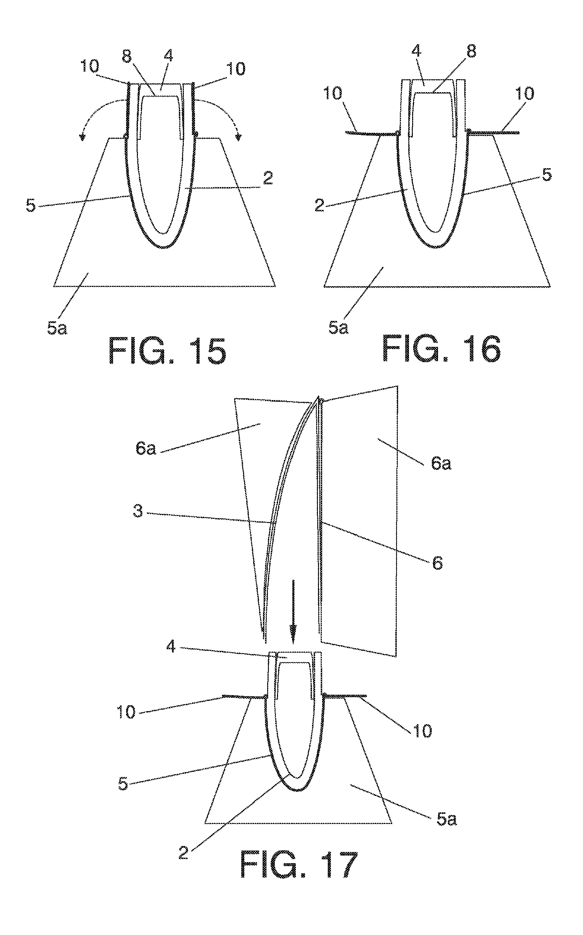

Figures number 15 and 16 again show the female mould of the leading edge (5) with the prepreg material that will form the leading edge piece (2) and the side member (4), in the stage in which the fins (10) are folded back to receive the female mould of the trailing edge (6) with the prepreg that will make up the trailing edge piece (3), as shown in figure 17.

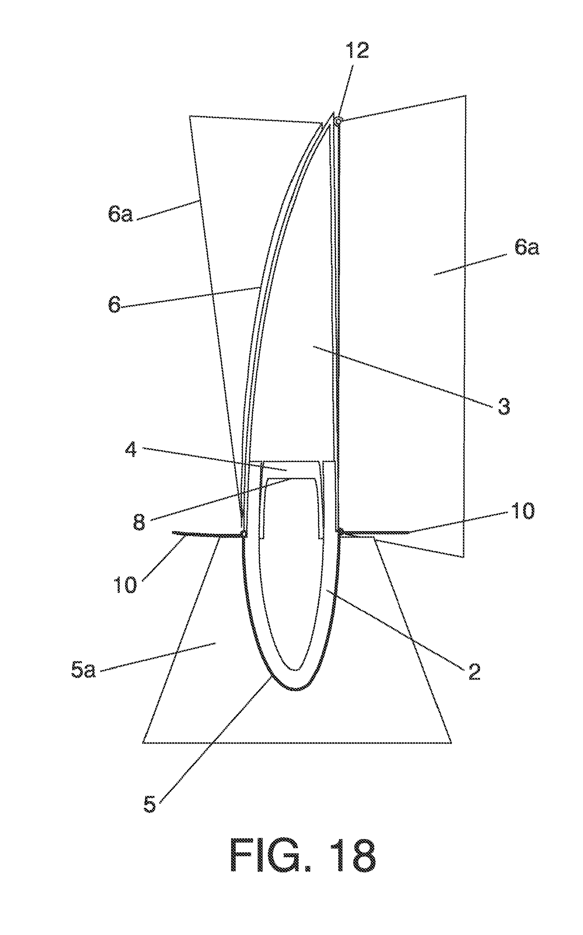

When both moulds have been joined together, as shown in figure 18, it is the time to communicate heat to the assembly and apply light pressure to the bonding area, preferably by some pneumatic means, so that the blade or structure (1) is formed in a single stage of application of heat to all the pieces composing it, i.e. in a single step and forming a solidly integrated body with no bonded parts.

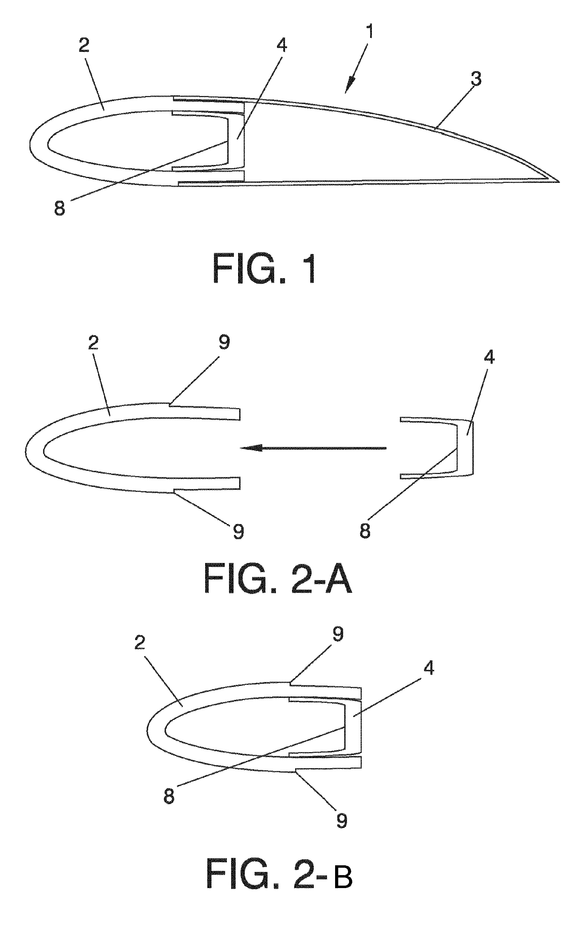

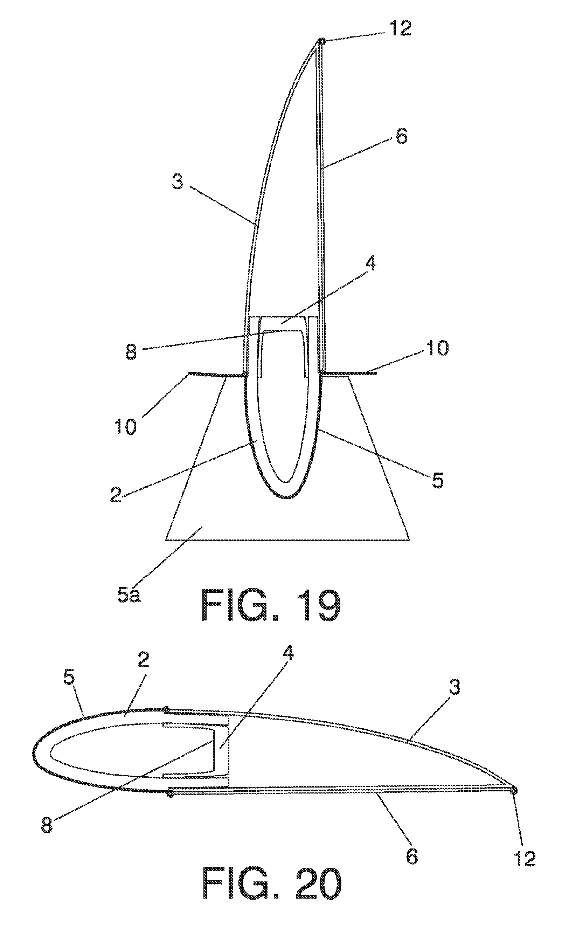

Figures 19 and 20 show the successive withdrawals of the female trailing and leading edge moulds in order to obtain the blade or structure (1) finished as shown in figure 1.

Having described the nature of the present invention sufficiently, as well as the way of putting it into practice, it is not considered necessary to make its explanation more extensive for any expert on the matter to be able to appreciate its scope and the advantages stemming from it, while placing it on record that, within its essentiality, it may be put into practice in other forms of embodiment that differ in detail from that stated by way of example and to which the protection that may be obtained shall be extended, providing that its fundamental principle is not altered, changed or modified.

## Claims

1. PROCEDURE FOR THE MANUFACTURE OF WIND TURBINE BLADES, PROPELLER BLADES, WINGS OR SIMILAR STRUCTURES, of the type of structures (1) that have a configuration which presents a leading edge and a trailing edge, **characterized in that** it comprises:
- the use of a female mould of the leading edge (5) to manufacture a leading edge piece (2), a female mould of the trailing edge (6) to manufacture a trailing edge piece (3), and a third mould (7) with which a male jig (8) made from composite is obtained that acts as a lost mould 15 to manufacture at least one inner structural side member (4);
- surface treatment with a demoulding agent of the inner faces of the aforesaid female moulds of the leading edge (5) and of the trailing edge (6) as in any composites process, applied automatically with a robot or numerical control machine and, once the demoulding agent is dry, application similarly in an automated manner with a robot of a varnish that will be the outer protector of the structure (1);
- application of the prepreg material in superimposed layers, according to a previously calculated sequence, one-dimensional, a veil, biaxial, triaxial, etc.;
- coverage of the prepreg laminates with a vacuum film, proceeding then to connect them to a pump for the removal of the possible air occluded between the laminates and improve compaction between the layers of prepreg;
- engagement of the female moulds of the leading (5) and of the trailing (6) edges and positioning of the pieces with the prepreg laminates;
- application of a light pressure on the assembly, to assist contact between the prepreg laminate parts, and subjected to a thermal curve for the process of curing or polymerization of the assembly of said pieces in one and the same stage or stroke.

2. PROCEDURE FOR THE MANUFACTURE OF wind turbine blades, PROPELLER BLADES, WINGS OR SIMILAR STRUCTURES, according to claim 1, **characterized in that** the male jig (8) that acts as a lost mould for making the structural side member (4) is either C- or closed-box or double-T shaped.

3. PROCEDURE FOR THE MANUFACTURE OF WIND TURBINE BLADES, PROPELLER BLADES, WINGS OR SIMILAR STRUCTURES, according to claims 1 y 2, **characterized in that** the prepreg material in superimposed layers is applied in the form of fabrics or tapes, which may be glass, carbon, aramides, hybrids, kevlar, thermoplastics, nanotubes, impregnated with vinyl ester resin, epoxy, PP, PET, amongst others of variable composition variable, in gram weights that may range from 500g/m² to 2000g/m² and present a variable configuration, for example, UD one-dimensional, a veil, biaxial, triaxial, etc.

4. PROCEDURE FOR THE MANUFACTURE OF WIND TURBINE BLADES, PROPELLER BLADES, WINGS OR SIMILAR STRUCTURES, according to claim 1 a 3, **characterized in that** support pieces are placed in the moulds as additional shims, right in the angle of the leading edge or in the angle of the trailing edge to seek the end form of the blade or structure, or else inserted between the layers of prepreg, or to mark and fix the position of the superimposed multi-layers of prepreg.

5. PROCEDURE FOR THE MANUFACTURE OF WIND TURBINE BLADES, PROPELLER BLADES, WINGS OR SIMILAR STRUCTURES, according to claim 4, **characterized in that** the support pieces are made from synthetic foam, balsa or honeycomb core.

6. PROCEDURE FOR THE MANUFACTURE OF WIND TURBINE BLADES, PROPELLER BLADES, WINGS OR SIMILAR STRUCTURES, according to claims 1 to 5, **characterized in that** on the vacuum film strips of "peelable fabric" are incorporated on the parts of the prepreg sheet that are going to be in direct contact with one another, which are removed at the time of joining up the pieces of the structure (1) with one another.

7. PROCEDURE FOR THE MANUFACTURE OF WIND TURBINE BLADES, PROPELLER BLADES, WINGS OR SIMILAR STRUCTURES, according to claims 1 to 6, **characterized in that**, in order to assist the correct positioning of the side members (4) between the inner surfaces of the prepregs of the leading (2) and trailing (3) edge pieces, the numerical control machine or robot marks on said prepregs the exact area with a ridge (9) for instance.

8. PROCEDURE FOR THE MANUFACTURE OF WIND TURBINE BLADES, PROPELLER BLADES, WINGS OR SIMILAR STRUCTURES, according to claims 1 a 7, 35 **characterized in that** the female moulds of the leading (5) and of the trailing (6) edges are metallic, executed with a plate which has metal reinforcing brackets (5a and 6a) welded on the outer side.

9. PROCEDURE FOR THE MANUFACTURE OF WIND TURBINE BLADES, PROPELLER BLADES, WINGS OR SIMILAR STRUCTURES, according to claims 1 a 8, **characterized in that** the female moulds of the leading (5) and of the trailing (6) edges are provided on their outer side with a heating system to achieve the curing of the prepreg sheets that eventually reaches a temperature of up to 150°C.

10. PROCEDURE FOR THE MANUFACTURE OF WIND TURBINE BLADES, PROPELLER BLADES, WINGS OR SIMILAR STRUCTURES, according to claims 1 a 9, **characterized in that** in certain areas the female moulds of the leading (5) and of the trailing (6) edges present holes which on the outer side of the mould are communicated with hoses that in turn permit connection to a compressor.

11. PROCEDURE FOR THE MANUFACTURE OF WIND TURBINE BLADES, PROPELLER BLADES, WINGS OR SIMILAR STRUCTURES, according to claims 1 to 10, 25 **characterized in that** prior to polymerization of the prepreg sheets, a flow of hot air is applied both from inside and outside at the same time.

12. PROCEDURE FOR THE MANUFACTURE OF WIND TURBINE BLADES, PROPELLER BLADES, WINGS OR SIMILAR STRUCTURES, according to claims 1 to 12, **characterized in that** when polymerization is completed a flow of cold air is applied to speed up demoulding.

13. PROCEDURE FOR THE MANUFACTURE OF WIND TURBINE BLADES, PROPELLER BLADES, WINGS OR SIMILAR STRUCTURES, according to claim 7, **characterized in that** the female mould of the leading edge (5) incorporates rotary fins (10) that permit the depositing of the prepreg sheets inside the mould marking the ridge (9).

14. PROCEDURE FOR THE MANUFACTURE OF WIND TURBINE BLADES, PROPELLER BLADES, WINGS OR SIMILAR STRUCTURES, according to claims 1 to 13, **characterized in that** the female mould of the trailing edge (6) is made up of two parts jointed by means of a hinge (11), which permits the folding-back movement of said pieces to form the mould.

15. PROCEDURE FOR THE MANUFACTURE OF WIND TURBINE BLADES, PROPELLER BLADES, WINGS OR SIMILAR STRUCTURES, according to claim 14, **characterized in that** in the female of the trailing edge (6) the prepreg laminating process 20 is carried out first of all with the mould deployed, and a number of longitudinal prepreg tapes or strips are deposited right on the hinge (11) in order to strengthen and consolidate this area.

16. BLADE-LIKE STRUCTURE, obtained by means of a procedure as described in claims 1 to 15, **characterized in that** this is made up of a piece forming a leading edge (2), a piece forming a trailing edge (3) and at least one piece forming an inner reinforcing side member (4); **in that** said pieces are made from sheets of prepreg material joined together by means of a single thermal curing step and forming an integral body with no bonded parts.
